# EUROPÄISCHE PATENTSCHRIFT

(11) **EP 1 913 916 B1**
(45) Veröffentlichungstag und Bekanntmachung des Hinweises auf die Patenterteilung: **16.12.2009**
(21) Anmeldenummer: 07020496.1
(22) Anmeldetag: 19.10.2007
(51) Int. Cl.: A61G 3/06, B60P 1/43

(54) **Faltrampe**
Folding ramp
Rampe pliable

(30) Priorität: 21.10.2006 DE 202006016142 U
(43) Veröffentlichungstag der Anmeldung: 23.04.2008
(73) Patentinhaber: Hübner Transportation GbmH, 34123 Kassel (DE)
(72) Erfinder: Ehlers, Niklas, 34266 Niestetal (DE)
(74) Vertreter: Walther, Walther & Hinz GbR

(56) Entgegenhaltungen:
- EP-A- 1 629 814
- WO-A-93/25781
- US-A1- 2005 241 083
- US-B1- 6 269 508

## Beschreibung

Die Erfindung betrifft eine Faltrampe, insbesondere um Rollstühlen den Zugang zu Fahrzeugen des öffentlichen Personennahverkehrs, zum Beispiel Bussen, zu ermöglichen, umfassend mehrere, vorzugsweise drei Rampenglieder, die durch in Laufrichtung verlaufende Scharniere untereinander verbunden sind, wobei die Rampenglieder fahrzeugseitig zum Boden des Fahrzeugs zu abgewinkelte Flügelelemente aufweisen.

Rampen der unterschiedlichsten Art sind bekannt. So sind insbesondere Klapprampen bekannt, die im Boden des Fahrzeugs im Bereich des Einstieges eingelassen sind und die zum Betrieb nach außen geklappt werden. Des Weiteren sind motorbetriebene Rampen bekannt, die in einem Gehäuse im Boden des Fahrzeugs eingelassen sind und die motorbetrieben ausfahren und abklappen und so Rollstuhlfahrern den Zugang in das Innere des Fahrzeugs ermöglichen.

Es sind allerdings auch Fahrzeuge bekannt, die nicht mit derartigen Rampen ausgerüstet sind bzw. auch nicht nachrüstbar sind. Insofern ist bereits aus der WO 93/25781 eine Faltrampe der eingangs genannten Art bekannt, bei der die einzelnen Rampenglieder durch Gurte klappbar miteinander verbunden sind. Allerdings besitzt diese Rampe keine Flügel an den Rampengliedern, weshalb für den Rollstuhlfahrer eine, wenn auch kleine, Stufe überwunden werden muss. Die erfindungsgemäße Faltrampe mit drei Rampengliedern zeichnet sich nun dadurch aus, dass das Flügelelement des mittleren Rampengliedes kürzer ist, als das der seitlichen Rampenglieder. Grundsätzlich wäre vom Grundsatz her auf das Flügelelement beim mittleren Rampenglied zu verzichten; es hat sich allerdings herausgestellt, dass dann, wenn Rollstuhlfahrer, aus welchen Gründen auch immer, den mittleren Teil einer solchen dreigliedrigen Rampe mehr belasten als die äußeren Glieder, die äußeren Glieder hochklappen. Dies deshalb, weil sich unter Belastung das mittlere Rampengiied weiter in Richtung auf den Fahrzeugboden zu bewegen kann, als dies bei den äußeren beiden Rampengliedern der Fall ist. Durch einen verkürzten Flügel in der Mitte wird nun dieses seitliche Abheben der Rampenglieder zuverlässig verhindert. Insbesondere die verkürzte Ausbildung des mittleren abgewinkelten Flügels dient dazu, dass dieser kurze Flügel zwischen den beiden langen Flügeln der seitlichen Rampenglieder im zusammengefalteten Zustand der Rampe Platz findet und somit die Rampenglieder vollflächig im zusammengeklappten Zustand aufeinander liegen.
Die Lösung erfolgt mit den Merkmalen des Anspruchs 1.
Eine solche Faltrampe kann platzsparend in dem Fahrzeug des öffentlichen Personennahverkehrs untergebracht werden, so kann z. B. eine Box vorgesehen sein, in der eine derartige Faltrampe im zusammengefalteten Zustand bei Nichtgebrauch im Bereich des Türeinstiegs untergebracht werden kann. Zum Bedarf wird die Faltrampe aus der Box herausgenommen und im Bereich des Fahrzeugeinstieges ausgelegt. Da die zu überwindende Höhe nicht selten mehr als 20 cm beträgt, besteht die Gefahr, dass sich beim Übergang des Rollstuhles von der Rampe zum Fahrzeugboden die Rampe hinten anhebt. Durch die abgewinkelten Flügel wird ein solches Abheben verhindert.

Vorteilhaft ist weiterhin vorgesehen, dass die Scharniere zwischen den drei Rampengliedern gegenläufig klappbar sind. Das heißt, dass die Klapprampe ziehharmonikaförmig zusammenlegbar ist. Hierdurch wird insbesondere erreicht, dass die Flügel der äußeren Rampenglieder im zusammengeklappten Zustand der Rampe in gleicher Richtung abgewinkelt ausgerichtet sind und so einen geringeren Stauraum benötigen, wobei der kurze Flügel zwischen den beiden langen Flügeln im zusammengefalteten Zustand der Rampe genügend Platz findet.

Um ein leichtes Auffahren auf die Rampe zu ermöglichen, sind die Rampenglieder an ihren offenen Stirnseiten mit einem Kunststoffrand umspritzt, der nach außen abfallend ausgebildet ist. Durch diesen Kunststoffrand wird auch zuverlässig verhindert, dass die Rampenglieder stirnseitig während des Einsatzes beschädigt werden.

Das Rampenglied selbst besteht aus einer Metallplatte mit einer im Inneren angeordneten wabenartigen Struktur, einer sogenannten Metawellplatte, die für die erforderliche Steifigkeit des Rampengliedes sorgt.

Anhand der Zeichnung wird die Erfindung beispielhaft näher erläutert.

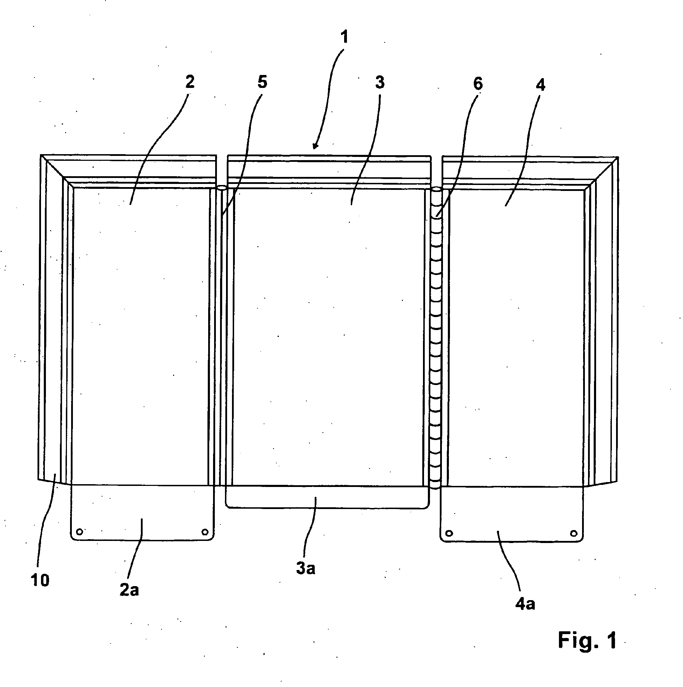

- Figur 1: zeigt die Rampe in einer Draufsicht;
- Figur 2: zeigt eine Detailansicht auf das Scharnier;
- Figur 3: zeigt die Unterbringung der Rampe in einer Box.

Die insgesamt mit 1 bezeichnete Faltrampe umfasst drei Rampenglieder 2, 3 und 4, die untereinander durch Scharniere 5 und 6 miteinander verbunden sind. Die Anordnung der Scharniere 5 und 6 ist derart, dass die Faltrichtung der Rampenglieder 2 und 4 relativ zum Rampenglied 3 gegensätzlich ist. Die Rampenglieder 2 bis 4 weisen endseitig jeweils Flügelelemente 2a, 3a, 4a auf, wobei die Flügelelemente 2a, 3a, 4a abgewinkelt an den Rampengliedern angeordnet sind, so dass dann, wenn die Faltrampe im Bereich des Fahrzeugeinstieges liegt, die Flügelelemente 2a, 3a, 4a auf dem Boden des Fahrzeugs aufliegen. Die Rampenglieder 2, 3, 4 sind an ihren Stirnseiten mit einem Kunststoffrand 10 umspritzt, der nach außen abfallend ausgebildet ist, so dass der Übergang auf das Rampenglied für den Rollstuhlfahrer abgeflacht ist.

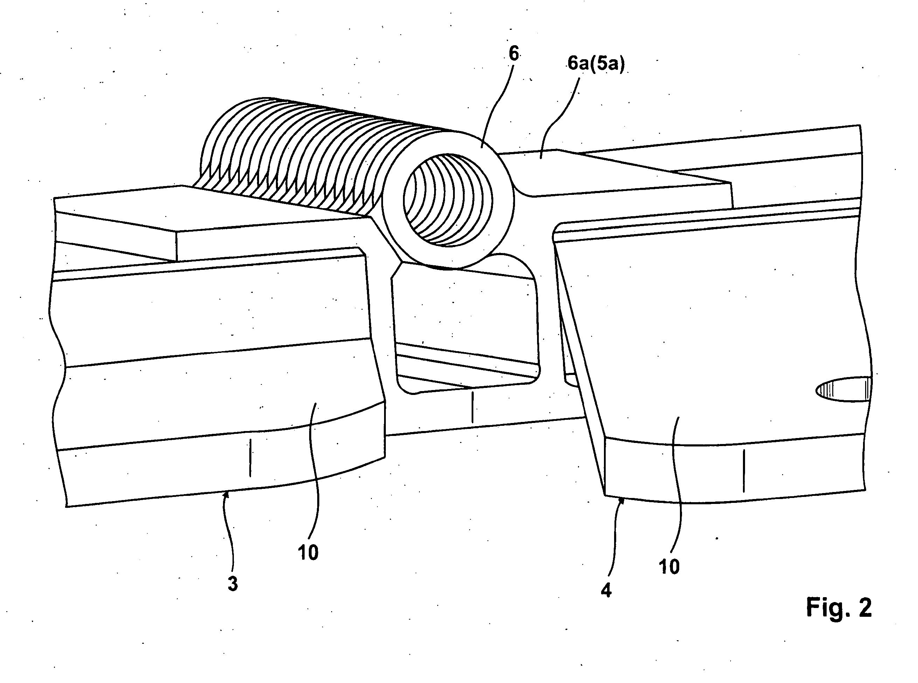

Wie sich aus Figur 2 ergibt, besitzt das Scharnier 6, allerdings auch das Scharnier 5, seitliche Stege 6a (5a), durch die die Rampenglieder auf ihrer Ober- und Unterseite formschlüssig erfasst werden. An den Stegen sind die Rampenglieder mit dem Scharnier 5, 6 verklebt.

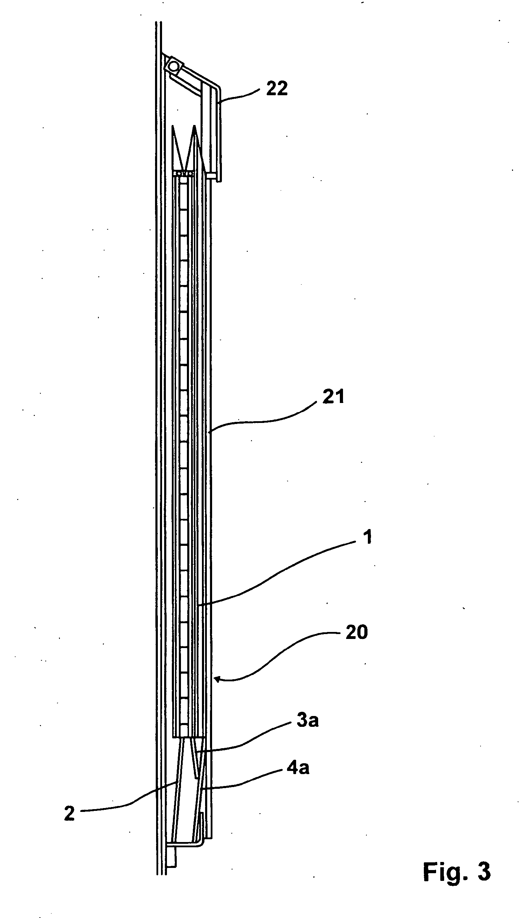

Die Anordnung der zusammengefalteten Rampe 1 in einer Box 20 ergibt sich aus Figur 3. Dort ist erkennbar, dass die Flügel 2a und 4a im zusammengeklappten Zustand der Rampe in die gleiche Richtung weisen, der Flügel 3a allerdings in die entgegengesetzte Richtung, was daraus resultiert, dass die Scharniere 5 und 6 gegenläufig klappbar sind

Erkennbar ist der Flügel 3a kürzer, so dass er genügend Raum zwischen den beiden anderen Flügeln findet. Die Box 20 umfasst ein Gehäuse 21 sowie einen Deckel 22 durch den die zusammengefaltete Rampe in die Box einschiebbar ist.

## Patentansprüche

1. Faltrampe (1), insbesondere um Rollstühlen den Zugang zu Fahrzeugen des öffentlichen Personennahverkehrs zu ermöglichen, umfassend drei Rampenglieder (2, 3, 4), die durch in Laufrichtung verlaufende Scharniere (5, 6) untereinander verbunden sind, wobei die Rampenglieder (2, 3, 4) fahrzeugseitig zum Boden des Fahrzeugs zu abgewinkelte Flügelelemente (2a, 3a, 4a) aufweisen.
**dadurch gekennzeichnet,**
**dass** (2, 3, 4) das Flügelelement (3a) des mittleren Rampengliedes (3) kürzer ist, als das der seitlichen Rampenglieder.

2. Vorrichtung nach Anspruch 1,
**dadurch gekennzeichnet,**
**dass** das die Scharniere (5, 6) zwischen den drei Rampengliedern (2, 3, 4) gegenläufig klappbar sind.

3. Vorrichtung nach einem der vorangehenden Ansprüche,
**dadurch gekennzeichnet,**
**dass** die Rampenglieder (2, 3, 4) an ihren offenen Stirnseiten mit einem Kunststoffrand (10) umspritzt sind, der nach außen abfallend ausgebildet ist.

4. Vorrichtung nach einem der vorangehenden Ansprüche,
**dadurch gekennzeichnet,**
**dass** das Rampenglied (2, 3, 4) eine Metallplatte mit einer Wabenstruktur aufweist.

## Claims

1. A folding ramp (1), in particular for allowing wheelchair drivers access to public transport vehicles, incorporating three ramp members (2, 3, 4) which are joined together through hinges (5, 6) extending in the direction of travel, said ramp members (2, 3, 4) comprising, on the side of the vehicle, wing elements (2a, 3a, 4a) which are angled toward the floor of the vehicle,
**characterized in**
**that** the wing element (3a) of the central ramp member (3) is shorter than that of the side members of the ramp.

2. The apparatus as set forth in claim 1,
**characterized in**
**that** the hinges (5, 6) are foldable in opposite directions between the three ramp members (2, 3, 4).

3. The apparatus as set forth in any one of the previous claims,
**characterized in**
**that** a plastic border (10) is molded around the open end sides of the ramp members (2, 3, 4), said plastic border being configured to slope downward toward the outside.

4. The apparatus as set forth in any one of the previous claims,
**characterized in**
**that** the ramp member (2, 3, 4) comprises a metal panel with a honeycomb structure.

## Revendications

1. Rampe (1) pliable, notamment pour permettre à des chaises roulantes l'accès à des véhicules du transport public, du type comprenant trois membres de rampe (2, 3, 4) qui sont reliés ensemble par des charnières (5, 6) s'étendant suivant la direction de circulation, les membres (2, 3, 4) de la rampe comportant côté véhicule des éléments en forme d'aile (2a, 3a, 4a) qui sont coudés vers le plancher du véhicule,
**caractérisée en ce**
**que** l'élément en forme d'aile (3a) du membre central (3) de la rampe est plus court que celui des membres latéraux de la rampe.

2. Dispositif selon la revendication 1,
**caractérisée en ce**
**que** les charnières (5, 6) entre les trois membres (2, 3, 4) de rampe sont rabattables dans des sens opposés.

3. Dispositif selon l'une quelconque des revendications précédentes,
**caractérisée en ce**
**qu'**un bord en plastique (10) est surmoulé sur les faces d'extrémité ouvertes des membres (2, 3, 4) de la rampe, ce bord étant réalisé de manière à être incliné vers le bas et vers l'extérieur.

4. Dispositif selon l'une quelconque des revendications précédentes,
**caractérisée en ce**
**que** le membre (2, 3, 4) de la rampe comporte une plaque de métal avec une structure alvéolaire.
